# NEW EUROPEAN PATENT SPECIFICATION

(11) **EP 3 138 393 B2**
(45) Date of publication and mention of the opposition decision: **03.04.2024**
(45) Mention of the grant of the patent: 07.07.2021
(21) Application number: 16187377.3
(22) Date of filing: 06.09.2016
(51) Int. Cl.: A01K 1/00

(54) **METHOD AND SYSTEM FOR OPERATING AT LEAST ONE GATE**
VERFAHREN UND VORRICHTUNG ZUM BETRIEB MINDESTENS EINES TORS
PROCÉDÉ ET SYSTÈME D'OPÉRATION D'AU MOINS UNE BARRIÈRE

(30) Priority: 07.09.2015 NL 2015405
(43) Date of publication of application: 08.03.2017
(73) Proprietor: Nedap N.V., 7141 DC Groenlo (NL)
(72) Inventor: Lammers, Rudie Jan Hendrik, 7141 DC Groenlo (NL); Gerritsen, Christoffel Petrus Albertus, 7141 DC Groenlo (NL)
(74) Representative: V.O.

(56) References cited:
- EP-A1- 1 212 939
- WO-A1-00/18221
- WO-A1-2010/047582
- WO-A1-2011/046434
- WO-A2-2011/039112
- AU-A1- 2003 200 598
- US-A- 5 183 008

## Description

### Field of the invention

The present invention is directed at a method according to the preamble of claim 1. The invention is further directed at a system for carrying out the method as described above. Such a method and system are known from WO 2010/047582.

### Background

On cattle farms and other enterprises within livestock industry, use is often made of automated guidance systems for leading cattle through the stables and across the farm (e.g. towards a milk robot, a feeding system or a separation station). These systems occasionally comprise automated gates that allow to selectively open and close for guiding animals selectively past certain lanes or into a certain fenced area or a box. For example, a separation station allows to separate animals from the herd selectively, e.g. such as to allow treatment of specific animals. These automated systems often apply remotely readable identification labels worn by the animals that can be identified when the animal walks past an antenna arrangement. The gate is opened when the animal which is to be separated walks past the antenna, and the gate is closed again after separation.

A problem with such systems exists in case multiple animals approach the automated gate shortly after one another. In particular, if an animal hesitates upon walking through a gate for whichever reason, a next animal may already force his head past the back of the hesitating previous animal. An antenna reading the identification label may then erroneously conclude that the animal which is to be separated, has already walked through the gate, and the gate may close too early. A similar problem arises when the former animal walks too fast, and the subsequent animal follows her predecessor in a same hurry. The gate may in that case close while the second animal is halfway past the gate, or the second animal may accidentally be separated together with the first animal.

WO 2010/047582 teaches to control an entrance gate depending on a signal indicative of a measured walking speed of an animal. The object of the invention is to improve the system and method known from WO 2010/047582.

### Summary of the invention

It is an object of the present invention to provide a method and system for operating at least one gate, wherein the above disadvantages of the prior art are obviated, and that allows automated guidance of animals through gates in a seamless manner, minimizing error and animal discomfort.

To this end, the method according to the invention is defined according to claim 1.

In accordance with the present invention, after reading the identification code from the identification label carried by the animal, the animal is followed by a sensor that allows to determine the direction and speed of the moving animal. This information is used for accurately and correctly timing the opening of the gate for the animal. Using knowledge of the direction and speed of the animal, obtained using a camera as sensor, it can be precisely determined when the head of the animal is sufficiently close to the gate for opening the gate just in time for the animal to walk through. This allows to manage the process well because error caused by accidently mixing up of identities of animals that are close to each other can be prevented. The timing of operating the gate is thereby improved, preventing e.g. premature or late opening thereof and the discomfort and error caused thereby. To follow the animal and operate the gate, step b further includes a step of keeping the identity as determined in step a. associated with the animal followed in step b.

In accordance with the invention , the timing of opening the gate is such that the gate minimally touches the animal, i.e. that the gate - while being opened - touches the animal at most once for a limited duration (few seconds at most).

Preferably, in accordance with some embodiments, the gate starts opening immediately prior to the animal walking through the gate. Therefore, in accordance with such embodiments, the moment on which the at least one gate is opened as being determined in step d based on the first data obtained in step c is such that it takes A seconds after the gate has opened when the animal starts walking through an opening which is closed by the at least one gate if the gate is closed. The amount of seconds A, in accordance with these embodiments, is preferably as short as possible (close to 0 seconds). In accordance with some other embodiments, this duration A is at least shorter than 10 seconds, preferably shorter than 5 seconds, and more preferably shorter than 1 second. As may be appreciated, if the gate is opened too early, preceding animals may take the opportunity to inadvertently walk through the gate. If, however, the gate is opened too late (in particular in case the gate is a separation gate), the animal to be guided through the gate may slip past the gate inadvertently. It will be appreciated, correct timing of the opening of the gate is therefore important for preventing error.

In accordance with the present invention, the first data determined in step c also comprises information about the animals body. The additional information about the direction of the animals body enables correction of the timing of the gate e.g. in case the animal is hesitating or is changing direction. This for example allows for anticipating on the behavior of the animal.

In accordance with some other embodiments of the present invention, the method may further comprise a step of :
e. determining, based on the first data obtained in step c, the moment on which the at least one gate is closed or starts to being closed. In addition to determining the correct timing for opening the gate, it may also be advantageous to determine the correct timing for closing the gate e.g. to prevent subsequent animals from walking through the gate inadvertently. Accurate timing of closing of the gate is as important as accurate opening thereof to prevent error and discomfort.

Therefore, in accordance with some further of these embodiments, in step e, the moment on which the at least one gate is closed or starts being closed is determined such that the gate is closed prior to a subsequent animal reaching an opening which is closed by the at least one gate if the gate is closed. Thus, suppose a subsequent animal closely follows the previous animal towards the open gate, as a result of the detection with the sensor and the first data obtained in step c, the timing of closing of the gate is adapted such as to prevent the subsequent animal from walking through the gate.

In accordance with some specifics of these embodiments, in step e, the determination of the moment on which the at least one gate starts to being closed is based on the first data obtained in step c., such that it takes B seconds after that the animal has fully walked through an opening which is closed by the at least one gate if the gate is closed, before the gate starts being closed, wherein B is shorter than 10 seconds, preferably shorter than 5 seconds, more preferably shorter than 1 second.

As may be appreciated, preferably the gate is closed immediately after the present animal has walked through the gate. For example, without the animal being pushed by the gate such as to get stuck, the gate may be operated such that it starts closing already when the back side of the animal is moving through the opening of the gate while briefly touching the animal while closing. Moreover, if it is detected, using the camera or sensor, that a subsequent animal tries to force itself passed the animal entering the gate, the gate may be closed such as to touch the present animal immediately prior to the head of the subsequent animal reaching the gate. This will separate the two animals from each other. The gate will lightly touch the animal to be separated, without catching the head of the next animal between the gate and the body of the animal passing the gate.

The sensor that is used in step c to obtain the first data of the animal is a camera, more specifically a video camera, a 3D camera, or a 3D video camera; or a camera system comprising a plurality of cameras. In particular, the use of a three dimensional (3D) camera enables to accurately determine the shape and position of each animal in the x, y, and z directions and allows accurate distinguishing between different animals within the field of view of the camera. This information can be used to accurately control the operation of the at least one gate.

In accordance with some embodiments, the gate may be a rotating gate or swing gate, characterized in that during opening of the gate the gate is open such as to move away from the animal in motion. In fact the gate may rotate in a direction of motion of the animal, while for closing the gate the gate may rotate in the reverse direction. If the gate moves in a counter direction, this may startle the animal or may stimulate her to quickly move past the gate in a wrong direction.

In accordance with yet other embodiments, the at least one gate may be a sliding gate, wherein in step d the determination of the moment on which the at least one gate starts to being opened is based on the first data obtained in step c such that the gate opens immediately prior to walking through of the animal, such that the time C between opening of the gate and passing of a head of the animal is shorter than 10 seconds, preferably shorter than 5 seconds, more preferably shorter than 1 second. As may be appreciated, sliding gates may be opened even faster than rotating or swing gates.

In a second aspect of the present invention there is provided a system according to claim 9, for carrying out the method of the invention. The system comprises at least one sensor for detecting the presence an animal, at least one reader for reading an identification code from an identification label carried by an animal and a computer connected to the at least one sensor and the at least one reader wherein the system is further provided with a gate at the second location wherein the system is arranged such that the identity can be determined by means of the reader at the first location wherein the system is further arranged for carrying out the following steps automatically:
a. determining the identity of an animal by means of reading an identification code from a identification label carried by the animal at a first location which is distinct from a second location where the gate is present wherein the identification code is read by means of the reader and is submitted to the computer;
b. following the animal which is identified in step a. by means of the at least one sensor when the animal travels from the first location towards the gate wherein the at least one sensor generates signals representing the presence of the animal which signals are submitted to the computer;
c. determining by means of the computer and based on the signals generated by the sensor first data about the animal wherein the first data comprises information about the direction wherein the animal moves and information about the speed with which the animal moves;
d. determining by means of the computer and based on the first data obtained in step c. the moment on which the at least one gate is opened or started to being opened.

According to the invention, the sensor used in step c to determine the first data is a camera, more specifically a video camera, a 3D camera, or a 3D video camera; or a camera system comprising a plurality of camera's.

In some embodiments, the at least one gate may be at least one of a group comprising: a separation gate, a rotating gate, a sliding gate, a swing gate.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a separation station applying a method and system of the present invention;
Figure 2 schematically illustrates the separation station of figure 1, showing a situation of two animals approaching a gate;
Figure 3 schematically illustrates a method of the present invention.

### Detailed description

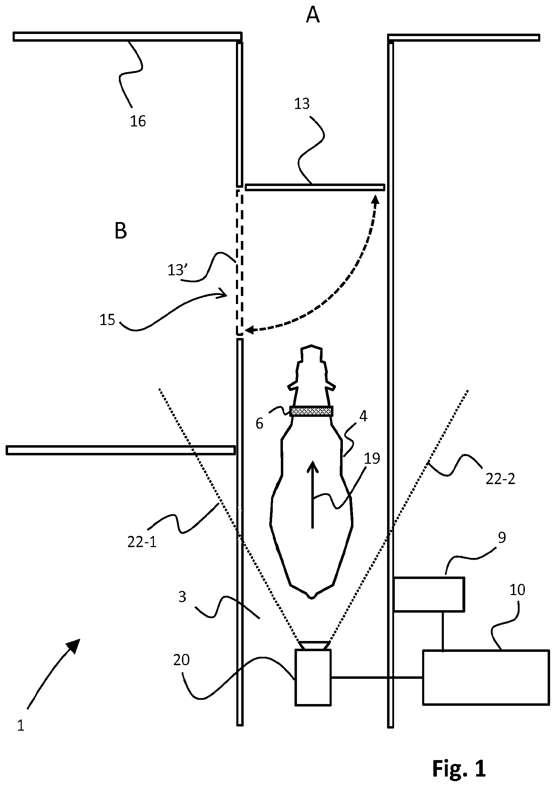

In figure 1, a separation station 1 comprises a plurality of fences 16. The fences 16 define a lane 3 wherein animals such as cows may approach the separation gate 13. The fences further define a first area A and a second area B. The second area B is used for containing the animals that are separated from the herd using the separation station 1. The remainder of the herd resides, after separation, in area A.

In figure 1, a cow 4 approaches the gate 13 while walking through lane 3. The cow 4 wears a label 6 that can be remotely sensed using an antenna 9 for obtaining identification data from the label. The cow 4 moves in the direction indicated by vector 19 at a certain speed. Above the lane 3, a camera 20, which may be a three dimensional camera, monitors the activity in the lane 3. The field of view of the camera 20 is schematically indicated by dotted lines 22-1 and 22-2. Information from the antenna 9 obtaining the identification data and the camera 20 is provided to a central server 10. Gate 13 is illustrated in figure 1 in the open position. Schematically in figure 1 the closed position of gate 13 is indicated by 13' with dashed lines. In the closed position, gate 13 closes opening 15.

In accordance with the present invention, when cow 4 approaches gate 13, upon walking past antenna 9, the identification data of cow 4 is obtained by antenna 9 and provided to the central system 10. At this moment, the head of cow 4 is already within the field of view 22-1, 22-2 of the camera 20. The camera starts monitoring cow 4 by providing its images to the central system 10. Central system 10 may associate the identifier obtained from antenna 9 with the cow 4 on the image of camera 20 received. From the images received from camera 20, the system 10 is able to obtain the direction of motion and the speed, as indicated by vector 19. In addition, it is also possible to obtain the exact position of the cow 4. With this data, central system 10 is able to determine the exact timing for opening gate 13 just in time. In the situation of figure 1, gate 13 is opened shortly before cow 4 reaches the gate 13. Instead of the situation illustrated in figure 1, the gate 13 may be opened even shorter prior to the cow 4 reaching the gate, and even such that upon opening of the gate 13 the gate briefly touches the cow 4. Cow 4 then walks through opening 15 and the gate 13 closes shortly after the cow has entered area B.

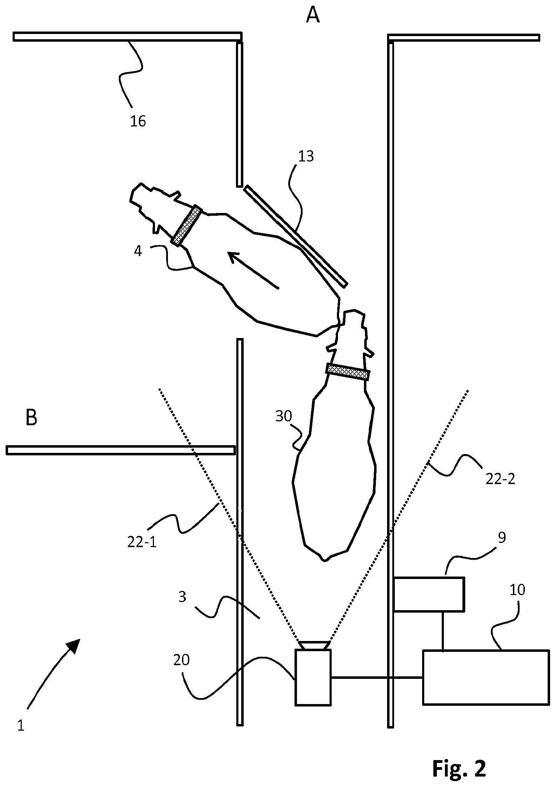

A further illustration is provided in figure 2. In figure 2, a first cow 4 and a second cow 30 walk through lane 3 in close proximity to each other. In fact, upon cow 4 entering the area B with the open gate 13, cow 30 already forces his head past the back of cow 4. To prevent cow 30 from entering area B as well, gate 13 already closes while touching cow 4, without forcing cow 4 to become stuck between the gate 13 and the fence of area B. Camera 20 accurately allows to distinguish cow 30 from cow 4 to operate the gate 13 in the correct manner.

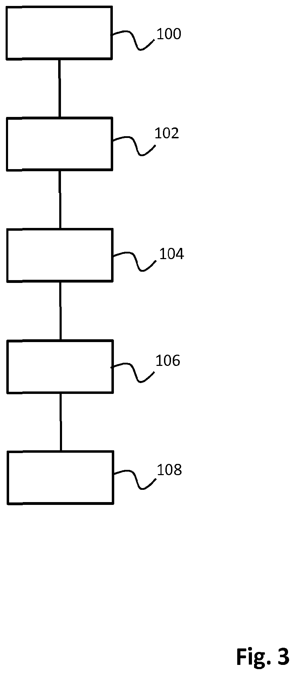

Figure 3 is a schematic illustration of the method of the present invention. Upon an animal approaching a reader unit or antenna for obtaining identification, in step 100 the identity of the animal is determined by means of reading its identification code from the identification label which is worn by the animal. Next, in step 102 in between the first location where the identification data is obtained and a second location where the gate is to be opened, a camera follows the animal while the animals travels from the first location to the gate.

Thereafter, in step 104, while approaching the gate 13, the camera 20 obtains first data about the animal, comprising at least the direction wherein the animal moves, and information about the speed with which the animal is approaching the gate. In accordance with the invention, the camera 20 will also determine the direction of movement of the animals body, which may be different from the overall direction of movement of the animal. Additional information may be obtained from the images received from the camera 20. Also the orientation of the animal and the exact position or shape of the animal, as well as similar information from other animals in the field of view of the camera may be obtained in this stage.

In step d, based on the date obtained by means of the camera 20, the exact moment on which the gate is opened or started to being opened is determined in step 106. This timing is used for opening the gate just in time for the animal to walk through.

In situations wherein a gate is opened and closed, the method contains a further step wherein also the exact moment of closing the gate is accurately timed based on the first data obtained in step 104. As may be appreciated, in some separation stations a gate may be arranged for guiding an animal either on the left or the right side of the gate, and the position of the gate can be such to allow correct passing of the gate by the animal. In these cases, there may not be an exact closing position for the gate, the gate simply is to be controlled such as to guide the cow to pass either on its left side or its right side.

The present invention has been described in terms of some specific embodiments thereof. It will be appreciated that the embodiments shown in the drawings and described herein are intended for illustrated purposes only and are not by any manner or means intended to be restrictive on the invention. The context of the invention discussed here is merely restricted by the scope of the appended claims.

## Claims

1. Method for operating at least one gate (13) from for example a separation station, a feeding station or a milking station wherein the method comprises the following steps:
a. determining the identity of an animal (4) by means of reading an identification code from a identification label (6) carried by the animal at a first location which is distinct from a second location where the gate is present;
b. following the animal which is identified in step a. by means of at least one camera (20) when the animal travels from the first location towards the gate;
c. determining by means of the at least one camera (20) first data about the animal (4) wherein the first data comprises information about the direction (19) wherein the animal moves and information about the speed with which the animal moves;
d. determining based on the first data obtained in step c. the moment on which the at least one gate (13) is opened or started to being opened, whereby in step d. the moment on which the at least one gate is opened or starts being opened is determined such that the gate while being opened touches the animal at most once and for a limited duration, whereby step b. further includes keeping the identity as determined in step a. associated with the animal (4) followed in step b; and
wherein the first data also comprise information about the direction of the animal's body.

2. Method according to claim 1, **characterised in that** in step d. the moment on which the at least one gate (13) is opened is determined based on the first data obtained in step c. such that it takes A seconds after that the gate has opened when the animal starts walking through an opening which is closed by the at least one gate (13) if the gate is closed, wherein A is shorter than 10 seconds, preferably shorter than 5 seconds, more preferably shorter than 1 second.

3. Method according to any preceding claim, **characterised in that** the method further comprises the following step:
e. determining based on the first data obtained in step c. the moment on which the at least one gate (13) is closed or starts to being closed.

4. Method according to claim 3, **characterised in that** in step:
e. the moment on which the at least one gate (13) is closed or starts being closed is determined such that the gate is closed prior to a subsequent animal reaching an opening which is closed by the at least one gate if the gate is closed.

5. Method according to claim 3 or 4, **characterised in that** in step e. the determination of the moment on which the at least one gate (13) starts to being closed is based on the first data obtained in step c. such that it takes B seconds after that the animal has fully walked through an opening which is closed by the at least one gate (13) if the gate is closed, before the gate starts being closed, wherein B is shorter than 10 seconds, preferably shorter than 5 seconds, more preferably shorter than 1 second.

6. Method according to any of the preceding claims, **characterised in that** the camera (20) is at least one of a group comprising: a video camera, a 3D camera, or a 3D video camera; or a camera system comprising a plurality of camera's.

7. Method according to claim any preceding claims, wherein the gate (13) is a rotating gate or swing gate, **characterised in that** during opening of the gate, the gate is opened such as to move away from the animal in motion.

8. Method according to any of the preceding claims 1-6, wherein the gate (13) is a sliding gate, and wherein in step d the determination of the moment on which the at least one gate starts to being opened is based on the first data obtained in step c. such that the gate opens immediately prior to walking through of the animal, such that a time C between opening of the gate (13) and passing of a head of the animal is shorter than 10 seconds, preferably shorter than 5 seconds, more preferably shorter than 1 second.

9. System (1) for carrying out the method of any preceding claim, comprising at least one camera (20) for detecting the presence of an animal (4), at least one reader (9) for reading an identification code from an identification label carried by an animal and a computer (10) connected to the at least one camera (20) and the at least one reader (9) wherein the system is further provided with a gate (13) at the second location wherein the system is arranged such that the identity can be determined by means of the reader (9) at the first location wherein the system is further arranged for carrying out the following steps automatically:
a. determining the identity of an animal (4) by means of reading an identification code from a identification label carried by the animal at a first location which is distinct from a second location where the gate is present wherein the identification code is read by means of the reader (9) and is submitted to the computer (10);
b. following the animal which is identified in step a. by means of the at least one camera (9) when the animal travels from the first location towards the gate (13) wherein the at least one camera generates signals representing the presence of the animal which signals are submitted to the computer (10);
c. determining by means of the computer (10) and based on the signals generated by the camera (20) first data about the animal wherein the first data comprises information about the direction (19) wherein the animal moves and information about the speed with which the animal moves;
d. determining by means of the computer (10) and based on the first data obtained in step c. the moment on which the at least one gate (13) is opened or started to being opened; and
wherein the first data also comprise information about the direction of the animal's body.

10. System according to claim 9, **characterized in that** the system is arranged such that the following steps can be carried out automatically:
e. determining by means of the computer (10) and based on the first data obtained in step c. the moment on which the at least one gate (13) is closed or starts to being closed.

11. System according to any of the claims 9 or 10, **characterised in that** the camera (20) is at least one of a group comprising: a video camera, a 3D camera, or a 3D video camera; or a camera system comprising a plurality of camera's.

12. System according to any of the claims 9-11, wherein the gate (13) is at least one of a group comprising: a separation gate, a rotating gate, a sliding gate, a swing gate.

## Patentansprüche

1. Verfahren zum Betreiben wenigstens eines Tores (13) von zum Beispiel einer Trennstation, einer Fütterungsstation oder einer Melkstation, wobei das Verfahren die folgenden Schritte umfasst:
a. Bestimmen der Identität eines Tieres (4) durch Lesen eines Identifikationscodes von einem Identifikationsetikett (6), das von dem Tier an einem ersten Ort getragen wird, der sich von einem zweiten Ort unterscheidet, an dem das Tor vorhanden ist;
b. Verfolgen des in Schritt a. identifizierten Tieres durch wenigstens eine Kamera (20), wenn sich das Tier vom ersten Ort zum Tor bewegt;
c. Bestimmen von ersten Daten über das Tier (4) durch die wenigstens eine Kamera (20), wobei die ersten Daten Informationen über die Richtung (19), in der sich das Tier bewegt, und Informationen über die Geschwindigkeit, mit der sich das Tier bewegt, umfassen;
d. Bestimmen, basierend auf den in Schritt c. erhaltenen ersten Daten, des Zeitpunkts, an dem das wenigstens eine Tor (13) geöffnet wird oder begonnen wird, es zu öffnen, wobei in Schritt d. der Zeitpunkt, zu dem das wenigstens eine Tor geöffnet wird oder begonnen wird, es zu öffnen, so bestimmt wird, dass das Tor, während es geöffnet wird, das Tier höchstens einmal und für eine begrenzte Dauer berührt, wobei Schritt b. ferner einschließt, dass die in Schritt a. bestimmte Identität dem in Schritt b. verfolgten Tier (4) zugeordnet wird, und wobei die ersten Daten auch Informationen über die Richtung des Körpers des Tieres umfassen.

2. Verfahren nach Anspruch 1, **dadurch gekennzeichnet, dass** in Schritt d. der Zeitpunkt, zu dem das wenigstens eine Tor (13) geöffnet wird, basierend auf den in Schritt c. erhaltenen ersten Daten so bestimmt wird, dass es A Sekunden dauert, nachdem das Tor geöffnet wurde, wenn das Tier beginnt, durch eine Öffnung zu laufen, die durch das wenigstens eine Tor (13) geschlossen wird, wenn das Tor geschlossen wird, wobei A kürzer als 10 Sekunden, vorzugsweise kürzer als 5 Sekunden, bevorzugter kürzer als 1 Sekunde ist.

3. Verfahren nach einem der vorhergehenden Ansprüche, **dadurch gekennzeichnet, dass** das Verfahren ferner den folgenden Schritt umfasst: e. Bestimmen, basierend auf den in Schritt c. erhaltenen ersten Daten, des Zeitpunkts, zu dem das wenigstens eine Tor (13) geschlossen wird oder begonnen wird, es zu schließen.

4. Verfahren nach Anspruch 3, **dadurch gekennzeichnet, dass** in Schritt e. der Zeitpunkt, zu dem das wenigstens eine Tor (13) geschlossen wird oder begonnen wird, es zu schließen, so bestimmt wird, dass das Tor geschlossen wird, bevor ein nachfolgendes Tier eine Öffnung erreicht, die von dem wenigstens einen Tor geschlossen wird, wenn das Tor geschlossen wird.

5. Verfahren nach Anspruch 3 oder 4, **dadurch gekennzeichnet, dass** in Schritt e. die Bestimmung des Zeitpunkts, zu dem wenigstens begonnen wird, das eine Tor (13) zu schließen, auf den in Schritt c. erhaltenen ersten Daten basiert, so dass es B Sekunden dauert, nachdem das Tier vollständig durch eine Öffnung gelaufen ist, die durch das wenigstens eine Tor (13) geschlossen wird, wenn das Tor geschlossen wird, bevor begonnen wird, das Tor zu schließen, wobei B kürzer als 10 Sekunden, vorzugsweise kürzer als 5 Sekunden, noch bevorzugter kürzer als 1 Sekunde ist.

6. Verfahren nach einem der vorhergehenden Ansprüche, **dadurch gekennzeichnet, dass** die Kamera (20) wenigstens eine aus einer Gruppe ist, die umfasst: eine Videokamera, eine 3D-Kamera oder eine 3D-Videokamera; oder ein Kamerasystem, das mehrere Kameras umfasst.

7. Verfahren nach einem der vorhergehenden Ansprüche, wobei das Tor (13) ein Drehtor oder ein Schwenktor ist, **dadurch gekennzeichnet, dass** beim Öffnen des Tores das Tor so geöffnet wird, dass es sich von dem sich bewegenden Tier wegbewegt.

8. Verfahren nach einem der vorhergehenden Ansprüche 1 bis 6, wobei das Tor (13) ein Schiebetor ist, und wobei in Schritt d die Bestimmung des Zeitpunkts, zu dem das wenigstens eine Tor zu öffnen beginnt, auf den in Schritt c. erhaltenen ersten Daten basiert, so dass sich das Tor unmittelbar vor dem Durchlaufen des Tieres öffnet, so dass eine Zeit C zwischen dem Öffnen des Tors (13) und dem Passieren eines Kopfes des Tieres kürzer als 10 Sekunden, vorzugsweise kürzer als 5 Sekunden, noch bevorzugter kürzer als 1 Sekunde ist.

9. System (1) zum Ausführen des Verfahrens nach einem der vorhergehenden Ansprüche, umfassend wenigstens eine Kamera (20) zum Erfassen der Anwesenheit eines Tieres (4), wenigstens ein Lesegerät (9) zum Lesen eines Identifikationscodes von einem Identifikationsetikett, das von einem Tier getragen wird, und einen Computer (10), der mit der wenigstens einen Kamera (20) und dem wenigstens einen Lesegerät (9) verbunden ist, wobei das System ferner mit einem Tor (13) an dem zweiten Ort versehen ist, wobei das System so angeordnet ist, dass die Identität durch das Lesegerät (9) an dem ersten Ort bestimmt werden kann, wobei das System ferner zum automatischen Ausführen der folgenden Schritte angeordnet ist:
a. Bestimmen der Identität eines Tieres (4) durch Lesen eines Identifikationscodes von einem Identifikationsetikett, das von dem Tier an einem ersten Ort getragen wird, der sich von einem zweiten Ort unterscheidet, an dem das Tor vorhanden ist, wobei der Identifikationscode durch das Lesegerät (9) gelesen und an den Computer (10) übermittelt wird;
b. Verfolgen des in Schritt a. identifizierten Tieres durch die wenigstens eine Kamera (9), wenn sich das Tier vom ersten Ort zum Tor (13) bewegt, wobei die wenigstens eine Kamera Signale erzeugt, die die Anwesenheit des Tieres darstellen, welche Signale an den Computer (10) übermittelt werden;
c. Bestimmen mittels des Computers (10) und basierend auf den von der Kamera (20) erzeugten Signalen erster Daten über das Tier, wobei die ersten Daten Informationen über die Richtung (19), in der sich das Tier bewegt, und Informationen über die Geschwindigkeit, mit der sich das Tier bewegt, umfassen;
d. Bestimmen durch den Computer (10) und basierend auf den in Schritt c. erhaltenen ersten Daten des Zeitpunkts, zu dem das wenigstens eine Tor (13) geöffnet ist oder begonnen wird, es zu öffnen; und
wobei die ersten Daten auch Informationen über die Richtung des Körpers des Tieres umfassen.

10. System nach Anspruch 9, **dadurch gekennzeichnet, dass** das System so angeordnet ist, dass die folgenden Schritte automatisch ausgeführt werden können:
e. Bestimmen durch den Computer (10) und basierend auf den in Schritt c. erhaltenen ersten Daten des Zeitpunkts, zu dem das wenigstens eine Tor (13) geschlossen wird oder begonnen wird, es zu schließen.

11. System nach einem der Ansprüche 9 oder 10, **dadurch gekennzeichnet, dass** die Kamera (20) wenigstens eine aus einer Gruppe ist, die umfasst: eine Videokamera, eine 3D-Kamera oder eine 3D-Videokamera; oder ein Kamerasystem, das mehrere Kameras umfasst.

12. System nach einem der Ansprüche 9 bis 11, wobei das Tor (13) wenigstens eines aus einer Gruppe ist, die umfasst: ein Trenntor, ein Drehtor, ein Schiebetor, ein Schwenktor.

## Revendications

1. Procédé pour faire fonctionner au moins une grille (13) à partir par exemple d'un poste de séparation, d'un poste d'alimentation ou d'un poste de traite dans lequel le procédé comprend les étapes consistant à :
a. déterminer l'identité d'un animal (4) au moyen de la lecture d'un code d'identification à partir d'une étiquette d'identification (6) portée par l'animal à un premier emplacement qui est distinct d'un deuxième emplacement où la grille est présente ;
b. suivre l'animal identifié à l'étape a. au moyen d'au moins une caméra (20) lorsque l'animal se déplace du premier emplacement vers la grille ;
c. déterminer au moyen de l'au moins une caméra (20) de premières données concernant l'animal (4) dans lequel les premières données comprennent des informations sur la direction (19) dans laquelle l'animal se déplace et des informations sur la vitesse à laquelle l'animal se déplace ;
d. déterminer sur la base des premières données obtenues à l'étape c. le moment auquel l'au moins une grille (13) est ouverte ou a commencé à s'ouvrir, dans lequel
à l'étape d. le moment auquel l'au moins une grille est ouverte ou commence à s'ouvrir est déterminé de telle sorte que la grille lors de son ouverture touche l'animal au plus une fois et pendant une durée limitée, dans lequel l'étape b. comprend en outre la conservation de l'identité telle que déterminée à l'étape a. associé à l'animal (4) suivi à l'étape b.
dans lequel les premières données comprennent également des informations sur la direction du corps de l'animal.

2. Procédé selon la revendication 1, **caractérisé en ce qu'**à l'étape d. le moment auquel l'au moins une grille (13) est ouverte est déterminé sur la base des premières données obtenues à l'étape c. de sorte que cela prend A secondes après que la grille s'est ouverte lorsque l'animal commence à marcher à travers une ouverture qui est fermée par l'au moins une grille (13) si la grille est fermée, où A est plus court que 10 secondes, de préférence plus court que 5 secondes, plus préférablement moins de 1 seconde.

3. Procédé selon l'une quelconque des revendications précédentes, **caractérisé en ce que** le procédé comprend en outre l'étape suivante :
e. la détermination sur la base des premières données obtenues à l'étape c. du moment auquel l'au moins une grille (13) est fermée ou commence à être fermée.

4. Procédé selon la revendication 3, **caractérisé en ce qu'**à l'étape e. le moment auquel l'au moins une grille (13) est fermée ou commence à être fermée est déterminé de telle sorte que la grille est fermée avant qu'un animal suivant n'atteigne une ouverture qui est fermée par l'au moins une grille si la grille est fermée.

5. Procédé selon la revendication 3 ou 4, **caractérisé en ce qu'**à l'étape e. la détermination du moment auquel l'au moins une grille (13) commence à se fermer est basée sur les premières données obtenues à l'étape c. tel qu'il faut B secondes après que l'animal ait complètement traversé une ouverture qui est fermée par l'au moins une grille (13) si la grille est fermée, avant que la grille ne commence à être fermée, où B est inférieur à 10 secondes, de préférence inférieur à 5 secondes, plus de préférence moins de 1 seconde.

6. Procédé selon l'une quelconque des revendications précédentes, **caractérisé en ce que** la caméra (20) fait partie au moins d'un groupe comprenant : une caméra vidéo, une caméra 3D, ou une caméra vidéo 3D ; ou un système de caméra comprenant une pluralité de caméras.

7. Procédé selon l'une quelconque des revendications précédentes, dans lequel la grille (13) est une grille tournante ou grille battante, **caractérisé en ce que** lors de l'ouverture de la grille, la grille est ouverte de manière à s'éloigner de l'animal en mouvement.

8. Procédé selon l'une quelconque des revendications 1 à 6 précédentes, dans lequel la grille (13) est une grille coulissante, et dans lequel, à l'étape d, la détermination du moment à lequel l'au moins une grille commence à être ouverte est basée sur les premières données obtenues à l'étape c, de sorte que la grille s'ouvre immédiatement avant le passage de l'animal, de sorte qu'un temps C entre l'ouverture de la grille (13) et le passage d'une tête de l'animal soit inférieur à 10 secondes, de préférence inférieur à 5 secondes, plus préférentiellement plus court que 1 seconde.

9. Système (1) pour mettre en oeuvre le procédé selon l'une quelconque des revendications précédentes, comprenant au moins une caméra (20) pour détecter la présence d'un animal (4), au moins un lecteur (9) pour lire un code d'identification à partir d'une étiquette d'identification portée par un animal, et un ordinateur (10) connecté à l'au moins une caméra (20) et l'au moins un lecteur (9), le système étant en outre pourvu d'une grille (13) au niveau du deuxième emplacement, dans lequel le système est agencé de telle sorte que l'identité peut être déterminée au moyen du lecteur (9) au premier emplacement dans lequel le système est en outre agencé pour exécuter automatiquement les étapes consistant à :
a. déterminer l'identité d'un animal (4) au moyen de la lecture d'un code d'identification à partir d'une étiquette d'identification portée par l'animal à un premier emplacement qui est distinct d'un deuxième emplacement où la grille est présente dans lequel le code d'identification est lu au moyen du lecteur (9) et est présentés à l'ordinateur (10) ;
b. suivre l'animal identifié à l'étape a. au moyen d'au moins une caméra (9) lorsque l'animal se déplace du premier emplacement vers la grille (13) dans lequel l'au moins une caméra génère des signaux représentant la présence de l'animal dont les signaux sont présentés à l'ordinateur (10) ;
c. déterminer au moyen de l'ordinateur (10) et sur la base des signaux générés par la caméra (20) des premières données sur l'animal, les premières données comprenant des informations sur la direction (19) dans laquelle l'animal se déplace et des informations sur la vitesse à laquelle l'animal se déplace ;
d. déterminer au moyen de l'ordinateur (10) et sur la base des premières données obtenues à l'étape c. le moment auquel l'au moins une grille (13) est ouverte ou a commencé à s'ouvrir ; et
dans lequel les premières données comprennent également des informations sur la direction du corps de l'animal.

10. Système selon la revendication 9, **caractérisé en ce que** le système est agencé de telle sorte que les étapes suivantes peuvent être effectuées automatiquement:
e. la détermination au moyen de l'ordinateur (10) et sur la base des premières données obtenues à l'étape c. le moment où l'au moins une grille (13) est fermée ou commence à être fermée.

11. Système selon l'une quelconque des revendications 9 ou 10, **caractérisé en ce que** la caméra (20) fait partie au moins d'un groupe comprenant : une caméra vidéo, une caméra 3D ou une caméra vidéo 3D ; ou un système de caméra comprenant une pluralité de caméras.

12. Système selon l'une quelconque des revendications 9 à 11, dans lequel la grille (13) est au m or oins l'un d'un groupe comprenant : une grille de séparation, une grille tournante, une grille coulissante, une grille battante.
